# EUROPEAN PATENT APPLICATION

(11) **EP 4 224 389 A1**
(43) Date of publication of application: **09.08.2023**
(21) Application number: 20956333.7
(22) Date of filing: 02.10.2020
(51) Int. Cl.: G06Q 10/10

(54) **CONTROL METHOD, GENERATION METHOD, GENERATION PROGRAM, AND INFORMATION PROCESSING DEVICE**

(71) Applicant: FUJITSU LIMITED, Kawasaki-shi, Kanagawa 211-8588 (JP)
(72) Inventor: NAKAMURA, Yosuke, Kawasaki-shi, Kanagawa 211-8588 (JP); KOJIMA, Rikuhiro, Kawasaki-shi, Kanagawa 211-8588 (JP); TSUNODA, Tadanobu, Kawasaki-shi, Kanagawa 211-8588 (JP); YASAKI, Koichi, Kawasaki-shi, Kanagawa 211-8588 (JP); YAMAMOTO, Dai, Kawasaki-shi, Kanagawa 211-8588 (JP); NIMURA, Kazuaki, Kawasaki-shi, Kanagawa 211-8588 (JP)
(74) Representative: Hoffmann Eitle
(86) International application number: PCT/JP2020/037547
(87) International publication number: WO 2022/070405

(57) **Abstract**

To enable a workflow to be easily used.
A storage unit (11) stores data of an input document. When the data of the document is input, a processing unit (12) adds first information to the data of the document The first information indicates a plurality of areas, in the document, that accepts input of signatures by a plurality of users according to an attribute of the document, and is used for processing of specifying an order of requestee users of a procedure involving the signatures in the workflow regarding the document. The processing unit (12) outputs the data of the document to which the first information has been added.

## Description

### FIELD

The present invention is related to a control method, a generation method, a generation program, and an information processing device.

### BACKGROUND

Workflow systems are sometimes used to support procedures by a plurality of users. For example, there is a proposal for a computer system that digitizes an approval procedure by collecting and distributing application forms and notices, and the like digitized by a computer according to a predetermined decision route and performing decision processing.

### CITATION LIST

### [PATENT DOCUMENT]

Patent Document 1: Japanese Laid-open Patent Publication No. 2017-4428

### SUMMARY

### [TECHNICAL PROBLEM]

Validity of data of a document to be processed in a workflow becomes a problem. For example, to guarantee the validity of document data, it is conceivable to make it possible to verify that the document data has been created according to the workflow and the approval procedure has been performed according to an order of the workflow. However, it is not easy for the users to appropriately set the order of requestees of the procedure for content of the document in the workflow system.

In one aspect, an object of the present invention is to provide a control method, a generation method, a generation program, and an information processing device that enable a workflow to be easily used.

### [SOLUTION TO PROBLEM]

In one aspect, a control method is provided. In this control method, a client device or a server device incorporates information regarding a data creation route or a data approval route within an organization or between organizations into data, the client device creates or approves data based on the incorporated information, and the server device and the client device cooperate to execute processing of including a digital signature of a data creator or a data approver in the data.

Furthermore, in one aspect, a generation method is provided. In this generation method, a computer adds, when data of a document is input, first information to the data of the document, the first information indicating a plurality of areas, in the document, that accepts input of signatures by a plurality of users according to an attribute of the document, and the first information being to be used for processing of specifying an order of requestee users of a procedure involving the signatures in a workflow regarding the document, and outputs the data of the document to which the first information has been added.

Furthermore, in one aspect, a generation program is provided.

Furthermore, in one aspect, an information processing device is provided.

According to an aspect of the embodiments, a control method to execute a process includes incorporating information regarding a data creation path or a data approval path within an organization or between organizations to data by a clint device or a server device; cooperating by the server device and the client device to include a digital signature of a creator or an approver of the data in the data by creating or approving the data by the client device based on the incorporated information.

### [ADVANTAGEOUS EFFECTS OF INVENTION]

In one aspect, it is possible to enable a workflow to be easily used.

The above-described object and other objects, features, and advantages of the present invention will become clear from the following description related to the appended drawings, which illustrate preferred embodiments as examples of the present invention.

### BRIEF DESCRIPTION OF DRAWINGS

FIG. 1 is a diagram for describing an information processing device according to a first embodiment;
FIG. 2 is a diagram illustrating an example of an information processing system according to a second embodiment;
FIG. 3 is a diagram illustrating a hardware example of a control server;
FIG. 4 is a diagram illustrating a functional example of the information processing system;
FIG. 5 is a diagram illustrating an example of an approval route table;
FIG. 6 is a diagram illustrating an example of an organization management table;
FIG. 7 is a diagram illustrating an insertion example of signature frames;
FIG. 8 is a flowchart illustrating a signature frame insertion example;
FIG. 9 is a diagram illustrating an example of adding personal signatures;
FIG. 10 is a diagram illustrating an example of adding an aggregate signature;
FIG. 11 is a diagram illustrating a signature adding example;
FIG. 12 is a flowchart illustrating a workflow control example;
FIG. 13 is a flowchart illustrating an example of approval processing;
FIG. 14 is a flowchart illustrating an aggregate signature addition processing example;
FIG. 15 is a diagram illustrating a data structure example (part 1) of document data; and
FIG. 16 is a diagram illustrating a data structure example (part 2) of document data.

### DESCRIPTION OF EMBODIMENTS

Hereinafter, the present embodiments will be described with reference to the drawings.

### [First Embodiment]

A first embodiment will be described.

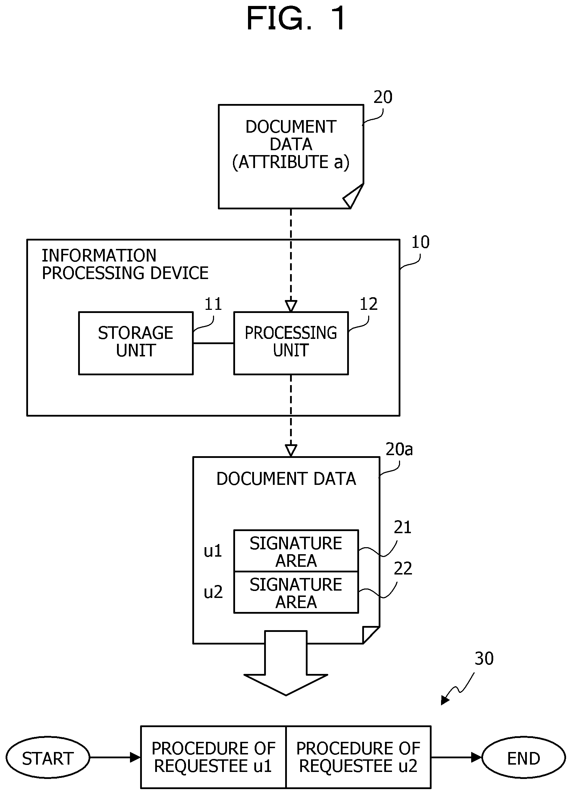

FIG. 1 is a diagram for describing an information processing device according to a first embodiment.

An information processing device 10 supports use of a workflow by users. The information processing device 10 includes a storage unit 11 and a processing unit 12.

The storage unit 11 may be a volatile storage device such as a random access memory (RAM), or may be a nonvolatile storage device such as a hard disk drive (HDD) or a flash memory. The processing unit 12 may include a central processing unit (CPU), a digital signal processor (DSP), an application specific integrated circuit (ASIC), a field programmable gate array (FPGA), and the like. The processing unit 12 may be a processor that executes a program. The "processor" may include a set of a plurality of processors (multiprocessor).

The storage unit 11 stores data to be used for processing by the processing unit 12. For example, the storage unit 11 stores information to be used to specify a requestee for a procedure such as approval according to an attribute of a document. Furthermore, the storage unit 11 stores data of an input document. Document data 20 is an example of the data of a document. Documents are classified in advance into attributes according to content of the documents, such as contracts, applications, and notices. The document data 20 includes information indicating the attributes. For example, the attribute of the document data 20 is an "attribute a".

When the data of the document is input, the processing unit 12 adds first information to the data of the document. The first information indicates a plurality of areas, in the document, that accepts input of signatures by a plurality of users according to the attribute of the document. Furthermore, the first information is used for processing of specifying an order of requestee users of a procedure involving signatures in a workflow regarding the document. The processing of specifying the order may be executed by the information processing device 10 or may be executed by another information processing device. The processing unit 12 outputs the data of the document to which the first information has been added.

For example, the processing unit 12 adds the first information to the document data 20 when the document data 20 is input. Document data 20a is data obtained by adding the first information according to the attribute a of the document to the document data 20. The processing unit 12 outputs document data 20a.

The document data 20a includes information of signature areas 21 and 22. Information of the signature areas 21 and 22 is an example of the first information. The signature areas 21 and 22 are areas that accept input of signatures by users u1 and u2, respectively. The signature areas 21 and 22 may include information of frames surrounding the signature areas 21 and 22, respectively. In a case where the content of the document is displayed on a display device based on the document data 20a, the signature areas 21 and 22 are displayed in the document. When the users u1 and u2 approve the appropriate document, the electronic signatures of the users u1 and u2 are added to the document data 20a, and handwritten signature images are input to the signature areas 21 and 22, respectively. By adding an electronic signature created using a private key of the user to the data, it becomes possible to verify that the appropriate data has been created by the appropriate user using a public key infrastructure (PKI) technique. The electronic signature for the document data 20a is data obtained by encrypting a hash value of information based on the document data 20a with the private key of the user or the like. The electronic signature may be called digital signature.

Note that the handwritten signature image may be input by the appropriate user by operating an input device coupled to the information processing device 10 or another information processing device that accepts input of approval by the user. Alternatively, the information processing device 10 or another information processing device may input an image of the user's signature previously held by the information processing device 10 or another information processing device in response to approval by the user.

Here, a positional relationship within the document of the signature areas 21 and 22 is associated with the order of procedures of the users u1 and u2 in the workflow 30 regarding the document data 20a. In one example, the signature areas 21 and 22 are inserted into the document data 20a such that the signature areas are displayed in order from top to bottom. Then, the order from top to bottom is associated with the order of procedures of the workflow 30. In this case, the information processing device 10 that controls the workflow 30 or another information processing device can specify that the order of the requestees for the procedures in the workflow 30 is the order of the users u1 and u2 based on the document data 20a. For example, the processing unit 12 may insert the signature areas 21 and 22 into the document data 20a in another order, such as an order from left to right, for example, and associate the order with the order of procedures of the workflow 30.

Alternatively, the processing unit 12 may add indexes such as 1, 2, and the like according to the order of the requestee users of the workflow to the respective pieces of information of the signature areas 21 and 22 to enable the order of the requestee users of the workflow to be specifiable according to the order of the indexes.

Furthermore, information indicating a correspondence relationship between the order of the signature areas and the order of the procedures of the workflow 30 may be predetermined in the storage unit 11 for each document or each attribute of the document. For example, in a case of starting the workflow 30 for the document data 20a, the information processing device 10 or another information processing device can specify the requestees and the order of the requestees of the workflow 30 based on the first information indicating the signature areas 21 and 22.

Note that the following method is conceivable as a method of inserting the signature areas 21 and 22 according to the order of procedures for the document data 20a.

For example, the storage unit 11 stores user attribute management information that holds: user attribute information indicating a user attribute to be satisfied by the user who puts the signature on the attribute of the document; and the order of the user attribute information according to the attribute of the document. Furthermore, the storage unit 11 stores user name management information that holds a user name in association with the user attribute information.

The processing unit 12 refers to the user attribute management information stored in the storage unit 11, and adds, to the first information, the user attribute information corresponding to the attribute of the appropriate document, in association with each of the plurality of areas. Then, the processing unit 12 converts the user attribute information included in the first information into the user name based on the user name management information.

As the user attribute information, for example, information of a job title is conceivable. The user attribute information may include information of departments within the organization or the like. In other words, the processing unit 12 may first add a template of a procedure route according to the user attribute information to the data of the document as the first information, and then convert the actual requestee user into the user name according to the user attribute information such as the job title. In this way, for example, even in a case where a personal name corresponding to the job title is changed due to a transfer or the like, and the user name of the requestee changes, change of the requestee can be easily performed by simply changing the user name management information.

According to the information processing device 10, when data of a document is input, the first information is added to the data of the document, the first information indicating a plurality of areas, in the document, that accepts input of signatures by a plurality of users according to the attribute of the document, and the first information being to be used for the processing of specifying the order of requestee users of the procedure involving the signatures in the workflow regarding the document. The data of the document to which the first information has been added is output.

Therefore, it is possible to enable the workflow to be easily used.

The information processing device 10 inserts the signature areas into the data of the document in the order according to the attribute of the document. The information processing device 10 or another information processing device can specify the order of the requestees in the workflow 30 and start the workflow 30 based on the data of the document to which the signature areas have been added. Therefore, the users do not have to determine the requestee of the workflow 30 for the appropriate document by themselves and input the requestees to the information processing device 10 or another information processing device. Therefore, the users become able to easily use the workflow.

For example, a client device or a server device incorporates information regarding a data creation route or a data approval route within an organization or between organizations into data, and the client device creates or approves data based on the incorporated information, so that the server device and the client device may cooperate to execute processing of including a digital signature of a data creator or a data approver in the data. Therefore, the users' operational burden associated with the workflow procedure is reduced, and the workflow becomes able to be easily used. Furthermore, it becomes possible to appropriately verify authenticity of the data. The client device and the server device are examples of the information processing device 10. Furthermore, the data creation may be performed by updating the data in which the information regarding the data creation route or the data approval route has been incorporated, for example.

Next, the functions of the information processing device 10 will be described in more detail by exemplifying a specific information processing system.

### [Second Embodiment]

Next, a second embodiment will be described.

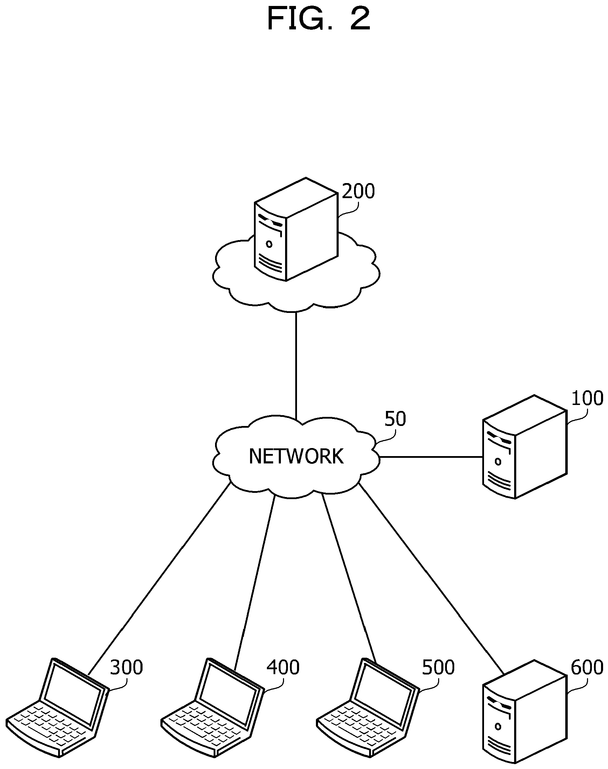

FIG. 2 is a diagram illustrating an example of an information processing system according to the second embodiment.

The information processing system of the second embodiment includes a control server 100, a cloud system 200, client devices 300, 400, and 500, and an aggregate signature execution server 600. The Control server 100, the cloud system 200, the client devices 300, 400, and 500, and the aggregate signature execution server 600 are coupled to a network 50. The network 50 is, for example, the Internet. For example, the client devices 300, 400, and 500 and the aggregate signature execution server 600 are coupled to a network such as a local area network (LAN) or a wide area network (WAN) within an organization such as a company, and are coupled to the network 50 such as the Internet via the network.

The control server 100 is a server computer that provides a workflow system. The control server 100 makes a workflow using document data stored in the cloud system 200 implementable. Furthermore, the document data is an example of the data of the document in the first embodiment. The control server 100 is an example of the information processing device 10 in the first embodiment.

The cloud system 200 is a server computer that provides a cloud service to the client devices 300, 400, and 500. The cloud service of the cloud system 200 provides a data storage area. For example, the cloud system 200 has a large-capacity storage and makes the storage area of the storage available to the client devices 300, 400, and 500. The storage provided by the cloud system 200 is sometimes called cloud storage.

The client devices 300, 400, and 500 are client computers such as personal computers (PCs) operated by users.

The aggregate signature execution server 600 is a server computer that adds an aggregate signature to document data. The aggregate signature is used to verify that the document data has been approved by each user in an appropriate order of a workflow.

For example, the control server 100 and the cloud system 200 function as web servers. Furthermore, the client devices 300, 400, and 500 function as web browsers. For example, the users of the client devices 300, 400, and 500 can use graphical user interfaces (GUIs) provided by the web servers executed by the control server 100 and the cloud system 200 by operating the web browsers.

The control server 100 provides a service that supports control of the workflow and guarantees validity of data stored in the cloud system 200 and targeted for the workflow. Such a service is sometimes called trust as a service (TaaS).

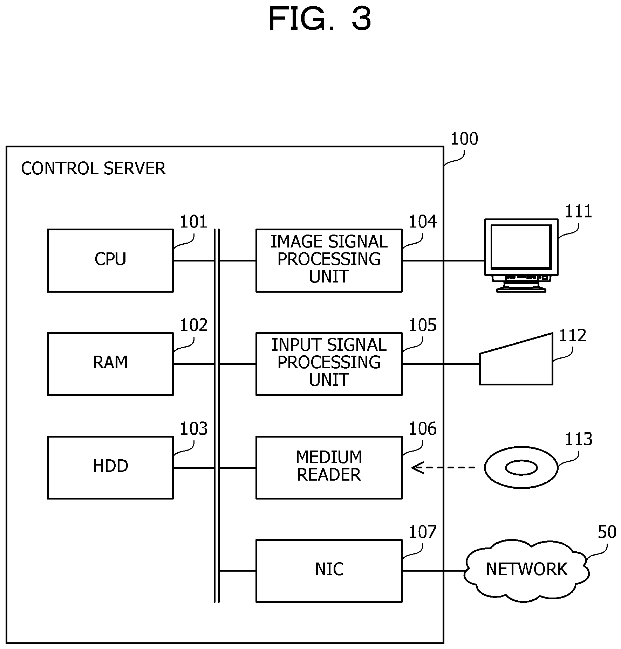

FIG. 3 is a diagram illustrating a hardware example of the control server.

The control server 100 includes a CPU 101, a RAM 102, an HDD 103, an image signal processing unit 104, an input signal processing unit 105, a medium reader 106, and a network interface card (NIC) 107. Note that the CPU 101 corresponds to the processing unit 12 of the first embodiment. The RAM 102 or the HDD 103 corresponds to the storage unit 11 of the first embodiment.

The CPU 101 is a processor that executes program instructions. The CPU 101 loads at least a part of a program and data stored in the HDD 103 into the RAM 102 and executes the program. Note that the CPU 101 may include a plurality of processor cores. Furthermore, the control server 100 may include a plurality of processors. Processing to be described below may be executed in parallel using a plurality of processors or processor cores. Furthermore, a set of the plurality of processors will be sometimes referred to as a "multiprocessor" or simply a "processor".

The RAM 102 is a volatile semiconductor memory that temporarily stores the program executed by the CPU 101 and data used by the CPU 101 for arithmetic operations. Note that the control server 100 may include any type of memory other than the RAM or may include a plurality of memories.

The HDD 103 is a nonvolatile storage device that stores software programs such as an operating system (OS), middleware, and application software, and data. Note that the control server 100 may include another type of storage device such as a flash memory or a solid state drive (SSD), and may include a plurality of nonvolatile storage devices.

The image signal processing unit 104 outputs an image to a display 111 coupled to the control server 100 in accordance with an instruction from the CPU 101. As the display 111, any type of display such as a cathode ray tube (CRT) display, a liquid crystal display (LCD), a plasma display, or an organic electro-luminescence (OEL) display can be used.

The input signal processing unit 105 acquires an input signal from an input device 112 coupled to the control server 100, and outputs the acquired input signal to the CPU 101. As the input device 112, a pointing device such as a mouse, a touch panel, a touch pad, or a trackball, a keyboard, a remote controller, a button switch, or the like may be used. Furthermore, a plurality of types of input devices may be coupled to the control server 100.

The medium reader 106 is a reading device that reads a program and data recorded on a recording medium 113. As the recording medium 113, for example, a magnetic disk, an optical disk, a magneto-optical (MO) disk, a semiconductor memory, or the like can be used. Examples of the magnetic disk include a flexible disk (FD) and an HDD. The optical disk includes a compact disc (CD) and a digital versatile disc (DVD).

The medium reader 106 copies, for example, the program and data read from the recording medium 113 to another recording medium such as the RAM 102 or the HDD 103. The read program is executed by the CPU 101, for example. Note that the recording medium 113 may be a portable recording medium, and may be used for distribution of the program and data. Furthermore, the recording medium 113 and the HDD 103 may be sometimes referred to as computer-readable recording media.

The NIC 107 is an interface that is coupled to the network 50 and communicates with another computer through the network 50. The NIC 107 is coupled to a communication device such as a switch or a router by a cable, for example. The NIC 107 may be wirelessly coupled to the network 50.

Note that the server computer used for the cloud system 200, and the client devices 300, 400, and 500 and the aggregate signature execution server 600 are also implemented by hardware similar to that of the control server 100.

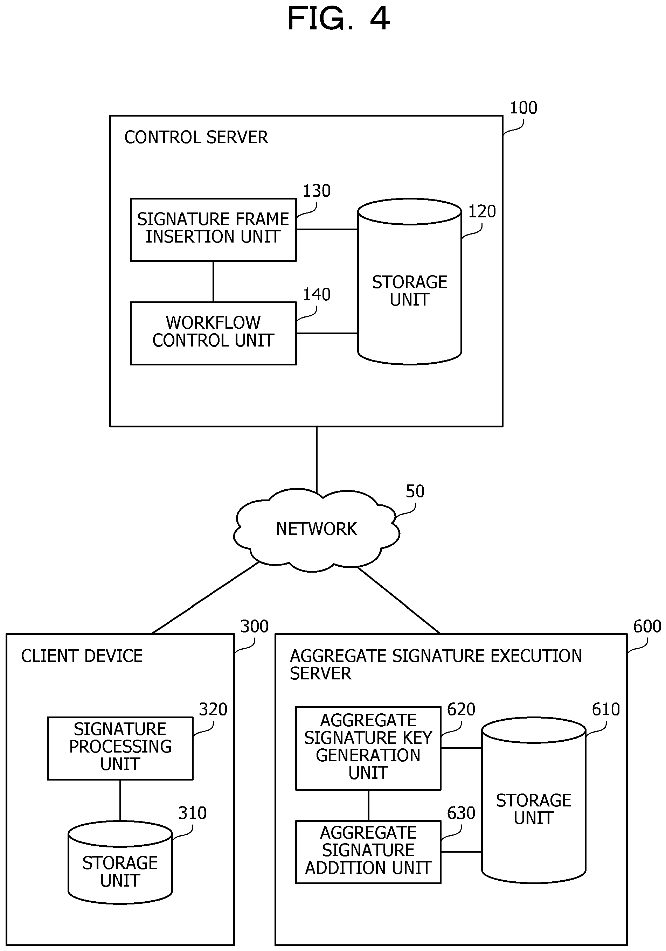

FIG. 4 is a diagram illustrating a functional example of the information processing system.

The control server 100 has a storage unit 120, a signature frame insertion unit 130, and a workflow control unit 140. A storage area of the RAM 102 or the HDD 103 is used as the storage unit 120. The signature frame insertion unit 130 and the workflow control unit 140 are implemented by the CPU 101 executing a program stored in RAM 102.

The storage unit 120 stores data to be used for processing of the signature frame insertion unit 130 and the workflow control unit 140. For example, the storage unit 120 stores an approval route table and an organization management table in advance.

In the approval route table, a template of an approval route in the workflow, in other words, template information is registered. In the approval route table, the order of approval subjects in the workflow is registered in advance for each attribute of a document to be approved using departments and job titles. The department and job title are examples of the user attribute information in the first embodiment. The approval route table is an example of the user attribute management information in the first embodiment.

In the organization management table, information of a name of the user for the department and job title is registered. The organization management table is an example of the user name management information in the first embodiment.

The signature frame insertion unit 130 inserts information of a signature frame into a target for the workflow, of the document data stored in the cloud system 200. As an example, the document data is assumed to be data in an extensible markup language (XML) format. An example of the document data in the XML format is a word file with an extension of docx. A word file is a file used in an application "Word" of Microsoft (registered trademark). Note that the document data may be of another data format.

Here, the signature frame is an example of the area for accepting input of a signature or the signature area in the first embodiment. The signature frame may be considered as a frame surrounding the signature area. The signature frame insertion unit 130 may add information of the signature area that is not surrounded by a frame like a signature field to the document data instead of the signature frame. Hereinafter, description will be given mainly using the signature frame as an example, but even in the case of using the signature field instead of the signature frame, the control server 100 performs similar processing to the case of using the signature frame.

For example, the control server 100 may accept input of the document data targeted for the workflow from the client device 300. For example, the control server 100 may accept designation by the user of the document data targeted for the workflow from the client device 300, and acquire the document data targeted for the workflow from the cloud system 200.

The signature frame insertion unit 130 adds the signature frame according to the attribute of the appropriate document to the document data based on the approval route table and the organization management table stored in the storage unit 120. Here, the signature frame insertion unit 130 discriminates the attribute of the document from predetermined information included in the document data.

When the signature frame insertion unit 130 inserts the signature frame into the appropriate document data, the workflow control unit 140 starts the workflow based on the document data. The workflow control unit 140 specifies the requestee user of the workflow based on the information of the signature frame included in the document data. When accepting a notification that the approval of the document by the current requestee user has been completed, the workflow control unit 140 requests approval from the next user. When approval of all the requestee users has been completed, the workflow control unit 140 requests the aggregate signature execution server 600 to add an aggregate signature to the appropriate document data. When the addition of the aggregate signature by the aggregate signature execution server 600 has been completed, the workflow control unit 140 terminates the workflow of the appropriate document data.

The client device 300 has a storage unit 310 and a signature processing unit 320. As the storage unit 310, the storage area of the RAM or the HDD included in the client device 300 is used. The signature processing unit 320 is implemented when the program stored in the RAM included in the client device 300 is executed by the CPU included in the client device 300.

The storage unit 310 stores the document data downloaded from the cloud system 200. Furthermore, the storage unit 310 stores a private key of the user, which is used to put a signature on the document data. Note that a key pair of the private key and a public key for each user may be generated by the control server 100 and shared with the client device of the appropriate user. An electronic certificate of the user may be generated by an electronic signature with the public key of the user with the control server 100 acting as a certification authority, or may be generated by another certification authority (not illustrated).

The private key and the electronic certificate of the user may be stored in a predetermined keystore of the client device. The private key and the electronic certificate of the user may be stored in a medium such as an integrated circuit (IC) card owned by the user, and the client device 300 may read the private key and the electronic certificate from the medium at the time of, for example, an electronic signature and use them for the signature.

The signature processing unit 320 accepts a request for approval of document data from the control server 100. The request for approval includes information of the user who should perform approval. When the appropriate user logs in to the cloud system 200 using the client device 300, the signature processing unit 320 displays a screen for accepting approval of the document data for which approval has been requested in an operation screen of the cloud system 200. The appropriate document data is downloaded from the cloud system 200 to the client device 300. When accepting input of approval of the document data from the user, the signature processing unit 320 adds the electronic signature using the private key of the appropriate user to the document data. At this time, the signature processing unit 320 adds the electronic signature of the appropriate user to the document data and adds a signature image of the appropriate user to the signature frame corresponding to the appropriate user. The addition of a signature image is called standard signature. The signature processing unit 320 uploads the document data with the electronic signature to the cloud system 200 when the signature processing has been completed. Then, the signature processing unit 320 then notifies the control server 100 that the signature processing has been completed.

Note that the client devices 400 and 500 also have similar functions to the client device 300 although not illustrated.

The aggregate signature execution server 600 has a storage unit 610, an aggregate signature key generation unit 620, and an aggregate signature addition unit 630. As the storage unit 610, the storage area of the RAM or the HDD included in the aggregate signature execution server 600 is used. The aggregate signature key generation unit 620 and the aggregate signature addition unit 630 are implemented when the program stored in the RAM included in the aggregate signature execution server 600 is executed by the CPU included in the aggregate signature execution server 600.

The storage unit 610 stores an aggregate signature key generated by the aggregate signature key generation unit 620.

The aggregate signature key generation unit 620 generates the aggregate signature key in advance based on a set of the private keys of the appropriate users and stores the aggregate signature key in the storage unit 610, for a possible combination of orders of the requestee users of the workflow.

When accepting the aggregate signature addition request for the document data from the control server 100, the aggregate signature addition unit 630 downloads the appropriate document data from the cloud system 200. The aggregate signature addition unit 630 acquires the aggregate signature key corresponding to the set of the plurality of requestee users for the appropriate document data from the storage unit 610, and adds the aggregate signature to the document data using the aggregate signature key. Details of the method of adding the aggregate signature will be described below. A series of signatures in which the user's personal electronic signature and the aggregate signature are added is sometimes called organization signature. The aggregate signature addition unit 630 uploads the document data to which the aggregate signature has been added to the cloud system 200. Then, the aggregate signature addition unit 630 notifies the control server 100 that the aggregate signature addition has been completed.

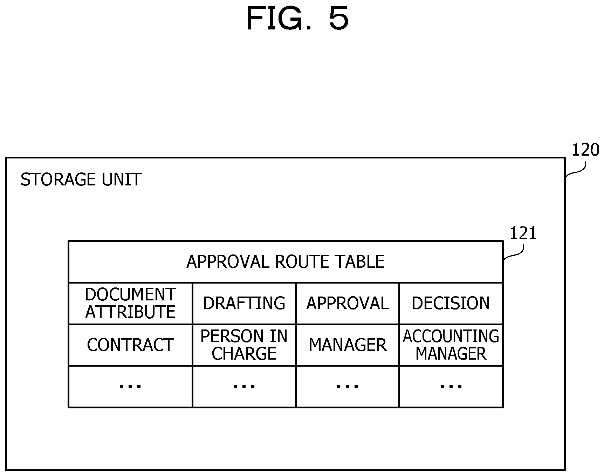

FIG. 5 is a diagram illustrating an example of the approval route table.

An approval route table 121 is stored in the storage unit 120 in advance. The approval route table 121 includes items of document attribute, drafting, approval, and decision.

In the item of document attribute, the attribute of the document is registered.

In the item of drafting, the department and job title in the company to which the user who drafts the document belongs are registered. In the item of approval, the department and job title of the user who approves the document are registered. In the item of decision, the department and job title of the user who make a decision regarding the document are registered. Here, the departments are sometimes omitted in the drafting, approval, and decision items. In a case where the department is omitted, the case indicates that the department is the same as the department of the user who has requested the control server 100 to start the workflow, in other words, the department of the user who has drafted the document.

Here, the drafting, approval, and decision are examples of a plurality of procedures involving signatures in the workflow. The series of procedures of drafting, approval, and decision should be carried out in this order. Note that the decision represents final approval, and can be considered to be a similar procedure to approval.

For example, in the approval route table 121, a record of the document attribute "contract", the drafting "person in charge", the approval "manager", and the decision "accounting manager" is registered. This record indicates that the document with the attribute "contract" is first drafted by the user with the job title "person in charge", then approved by the "manager" of the same department as the user who has drafted the document, and finally the decision is made by the "accounting manager", in other words, the manager of the accounting department.

In the approval route table 121, a template of the approval route is similarly registered for another document attribute. In the approval route given by the approval route table 121, two or more sets of departments and job titles corresponding to two or more requestee users including a drafter can be included for a certain document attribute.

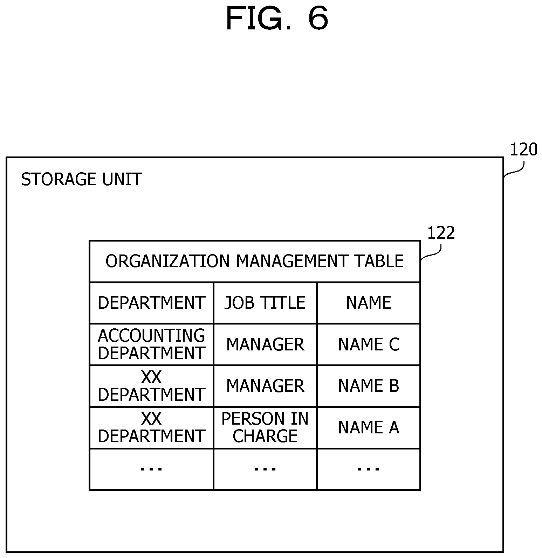

FIG. 6 is a diagram illustrating an example of the organization management table.

An organization management table 122 is stored in the storage unit 120 in advance. The organization management table 122 includes items of department, job title, and name.

In the item of department, the name of the department is registered. In the item of job title, the name of the job title is registered. In the item of name, the name of the user is registered.

For example, in the organization management table 122, a record in which the department is "accounting department", the job title is "manager", and the name is "name C" is registered. This record indicates that the name of the user who holds the job title "manager" in the department "accounting department" is the "name C".

In the organization management table 122, the names of other users are also registered in association with the departments and job titles. For example, in the organization management table 122, the name "name B" is registered for the department "XX department" and the job title "manager". Furthermore, in the organization management table 122, the name "Name A" is registered for the department "XX department" and the job title "person in charge".

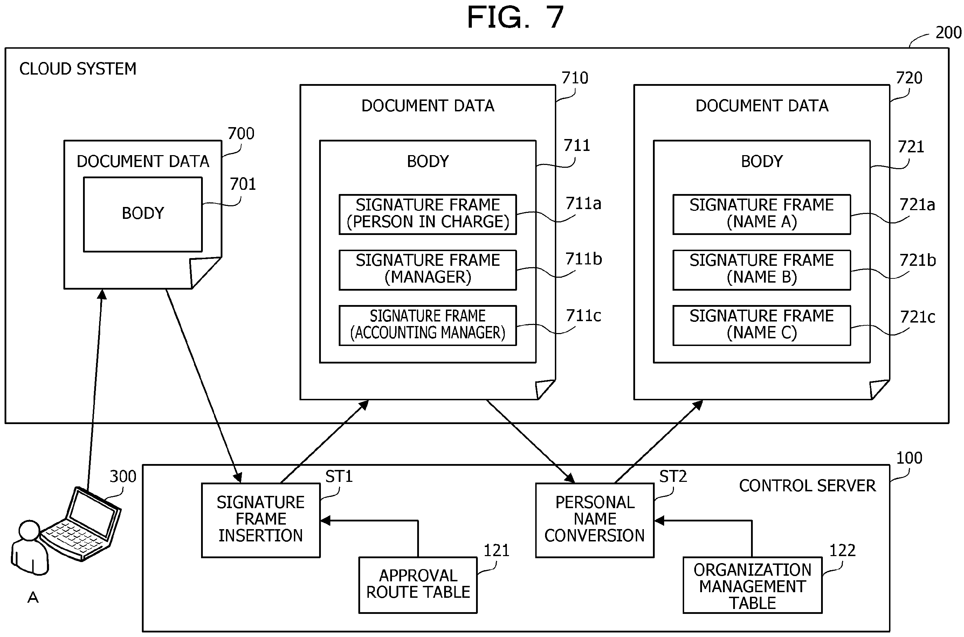

FIG. 7 is a diagram illustrating an insertion example of the signature frames.

For example, the user with the name A operates the client device 300 and uploads document data 700 to the cloud system 200. Here, for example, the user with the name A is described as a "user A". The user A is the drafter of the document data 700.

The user A operates the client device 300 and stores the document data 700 in a specific folder in the cloud system 200. The client device 300 notifies the control server 100 that the document data 700 has been stored in the folder. In response to the notification, the workflow control unit 140 inserts the signature frames into the document data 700 and starts the flowchart.

First, the signature frame insertion unit 130 accepts input of the document data 700. The signature frame insertion unit 130 adds the signature frames to a body 701 of the document data 700 based on the approval route table 121 (step ST1). For example, the document attribute of the document data 700 is assumed to be "contract". According to the approval route table 121, the approval route for the document attribute "contract" is in the order of the "person in charge" of the department that has performed drafting, the "manager" of the same department, and the "accounting manager" (the manager of the accounting department). For this reason, the signature frame insertion unit 130 adds information of three signature frames so that the three signature frames corresponding to the appropriate job titles are arranged in the order corresponding to the appropriate approval route in the body 701 of the document data 700. The information of signature frames includes the information of the appropriate departments and job titles.

Document data 710 indicates the document data after the signature frames have been added to the document data 700 in step ST1. A body 711 is the body after the signature frames have been added to the body 701. Signature frames 711a, 711b, and 711c correspond to the three signature frames added in step ST1. The signature frame 711a is the signature frame corresponding to the "person in charge" who is the first requestee in the workflow. The signature frame 711b is the signature frame corresponding to the "manager" who is the second requestee. The signature frame 711c is the signature frame corresponding to the "accounting manager who is the third requestee.

Next, the signature frame insertion unit 130 converts the department and job title corresponding to each of the signature frames 711a, 711b, and 711c into the personal name based on the organization management table 122 (step ST2). Document data 720 indicates the document data after personal name conversion has been performed for the document data 710 in step ST2. A body 721 is the body after the personal name conversion has been performed for the body 711. Signature frames 721a, 721b, and 721c are the signature frames after the names have been added in step ST2.

Here, for example, the information of the signature frame 711a includes the information of the job title "person in charge" of the drafted department "XX department". According to the organization management table 122, the name of the job title "person in charge" of the department "XX department" is the "name A". Therefore, the signature frame insertion unit 130 converts the information of the job title "person in charge" of the department "XX department" in the signature frame 711a into the "name A" and adds the "name A" to the signature frame 711a. The information of the signature frame 721a is obtained by adding the information of the "name A" to the information of the signature frame 711a.

Furthermore, the information of the signature frame 711b includes the information of the job title "manager" of the department "XX department". According to the organization management table 122, the name of the job title "manager" of the department "XX department" is the "name B". Therefore, the signature frame insertion unit 130 converts the information of the job title "manager" of the department "XX department" in the signature frame 711b into the "name B" and adds the "name B" to the signature frame 711b. The information of the signature frame 721b is obtained by adding the information of the "name B" to the information of the signature frame 711b.

Moreover, the information of the signature frame 711c includes the information on the job title "manager" of the department "accounting department" (in other words, the "accounting manager"). According to the organization management table 122, the name of the job title "manager" of the department "accounting department" is the "name C". Therefore, the signature frame insertion unit 130 converts the information of the job title "manager" of the department "accounting department" in the signature frame 711c into the "name C" and adds the "name C" to the signature frame 711c. The information of the signature frame 721c is obtained by adding the information of the "name C" to the information of the signature frame 711c.

For example, the information of the names added to the signature frames 721a, 721b, and 721c may be displayed together with the signature frames 721a, 721b, and 721c in a case where the content of the document data 720 is displayed by display devices of the client devices 300, 400, and 500, or the like.

Next, an example of a signature frame insertion procedure by the control server 100 will be described.

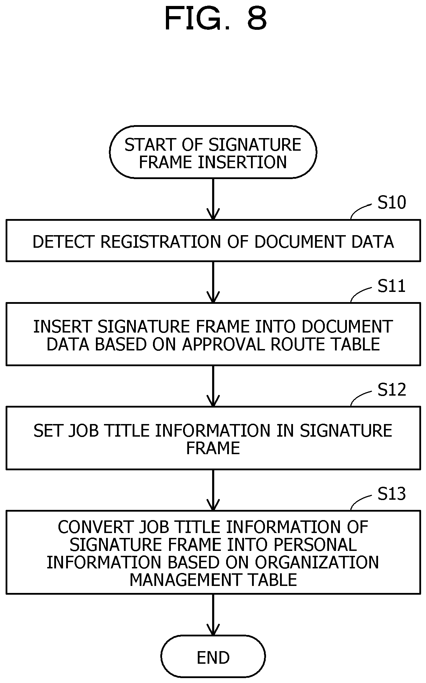

FIG. 8 is a flowchart illustrating a signature frame insertion example.

(S10) The signature frame insertion unit 130 detects registration of the document data 700 targeted for the workflow from the client device 300 to the cloud system 200. For example, when detecting that the document data 700 has been stored in the specific folder for the workflow in the cloud system 200, the signature frame insertion unit 130 detects the registration of the document data 700 targeted for the workflow. As described above, the signature frame insertion unit 130 may acquire authentication information of the user who operates the client device 300 at the time of login to the cloud system 200, or the like, and store the department, job title, name, and the like corresponding to the authentication information in advance. The signature frame insertion unit 130 acquires the appropriate document data 700 from the cloud system 200. Note that step S10 may be considered to correspond to processing of inputting the document data 700 to the signature frame insertion unit 130.

(S11) The signature frame insertion unit 130 inserts the information of the signature frames into the document data based on the approval route table 121. For example, the signature frame insertion unit 130 specifies the three requestees of the "person in charge", "manager", and "accounting manager" from the approval route table 121 for the document attribute "contract" of the document data 700. Therefore, the signature frame insertion unit 130 updates the document data 700 with the document data 710 by adding the three signature frames corresponding to the three requestees to the body 701 of the document data 700.

Note that an addition position of the signature frames in the body 701 may be determined in advance for all of documents, or may be determined in advance for each document attribute. For example, information of the addition position of the signature frames for each document attribute may be stored in the storage unit 120 in advance. In that case, the signature frame insertion unit 130 specifies the addition position of the signature frames based on the information of the addition position. The signature frame insertion unit 130 may store the generated document data 710 in the cloud system 200. Furthermore, the storage unit 120 may store information of an arrangement order of the signature frames corresponding to the order of the requestees of the workflow. As the information of the arrangement order, for example, information indicating that the order from top to bottom or the order from left to right is set to correspond to the order of the requestees, or the like is conceivable.

(S12) The signature frame insertion unit 130 sets job title information for the signature frames added in the step S11 based on the approval route table 121. For example, the signature frame insertion unit 130 sets the job title information for the three signature frames added in step S11. In other words, the signature frame insertion unit 130 adds the information of the drafter's department "XX department" and the job title "person in charge" to the signature frame 711a corresponding to the first requestee. The signature frame insertion unit 130 adds the information of the department "XX department" and the job title "manager" to the signature frame 711b corresponding to the second requestee. The signature frame insertion unit 130 adds the information of the department "accounting department" and the job title "manager" to the signature frame 711c corresponding to the third requestee.

(S13) The signature frame insertion unit 130 converts the job title information of the signature frames into personal information based on the organization management table 122. For example, the signature frame insertion unit 130 converts the department "XX department" and the job title "person in charge" in the signature frame 711a into the "name A" and adds the "name A" to the signature frame 711a. Thereby, the signature frame 711a is updated with the signature frame 721a. Furthermore, the signature frame insertion unit 130 converts the information of the department "XX department" and the job title "manager" in the signature frame 711b into the "name B" and adds the "name B" to the signature frame 711b. Thereby, the signature frame 711b is updated with the signature frame 721b. Moreover, the signature frame insertion unit 130 converts the information of the department "accounting department" and the job title "manager" in the signature frame 711c into the "name C" and adds the "name C" to the signature frame 711c. Thereby, the signature frame 711c is updated with the signature frame 721c. In this way, the signature frame insertion unit 130 adds the signature frame associated with the information of the department and job title of the requestee user of the workflow to the document data 700, and converts the information of the department and job title of the signature frame into the name of the requestee user, thereby generating the document data 720. The signature frame insertion unit 130 stores the document data 720 in the cloud system 200. Then, the signature frame insertion ends.

The control server 100 starts the workflow based on the document data 720. The order of the requestees of the workflow is specified according to, for example, the positional relationship in the body 721 of the signature frames 721a, 721b, and 721c in FIG. 7. The positional relationship corresponds to the arrangement order of when the body 721 is displayed by the display device. For example, the order from top to bottom of the signature frames 721a, 721b, and 721c corresponds to the order of the requestees of the workflow. Alternatively, the order from left to right of the signature frames 721a, 721b, and 721c corresponds to the order of the requestees of the workflow. For example, the signature frame insertion unit 130 can determine what arrangement order is set to correspond to the order of the requestees of the workflow according to the document attribute. For example, the information of the arrangement order according to the document attribute may be stored in the storage unit 120 in advance.

The workflow control unit 140 starts the workflow based on the document data 720. The workflow control unit 140 requests each user to approve the document data according to the order of the workflow. By operating the client device used by the user himself/herself and logging in to the workflow system provided by the control server 100, the user can confirm the content of the workflow requested to the user him/herself and the content of the document data to be approved.

Next, an example of adding signatures to the document data will be described.

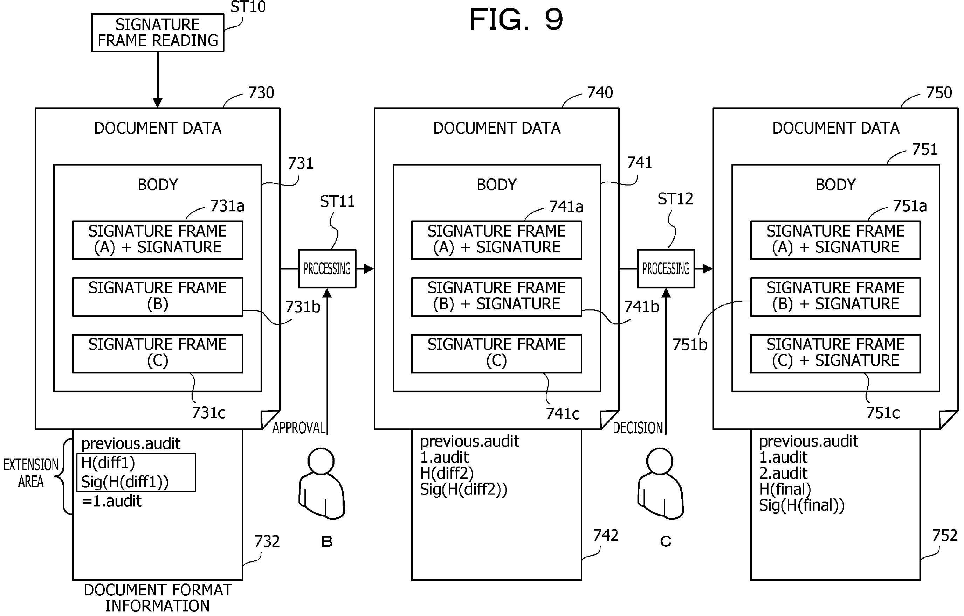

FIG. 9 is a diagram illustrating an example of adding personal signatures.

The workflow control unit 140 reads the signature frames 721a, 721b, and 721c in the document data 720, and specifies the order of the requestee users of the workflow. Specifically, the workflow control unit 140 sets the order of arrangement of the signature frames of when the document data 720 is displayed as the order of the requestees of the workflow (step ST10).

The client devices 300, 400, and 500 adds the personal signatures to the appropriate signature frames in the order of the requestees of the workflow, and adds history information to be used for verification, including the approval route, to the document data 720. Specifically, the following processing is performed.

The order of the requestees of the document data 720 is the order of the users A, B, and C. The first user A is the drafter. Therefore, the workflow control unit 140 requests the user A to put signature. The document data 720 is updated with document data 730 by performing the signature processing for the user A. The document data 730 has a body 731 and document format information 732.

The client device 300 operated by the user A creates difference information diff1. The difference information diff1 indicates a difference between the content of the body 721 of the document data 720 at the time of approval request to the appropriate user and the content of the body 731 of the document data 730 immediately after the approval is performed. Note that the content of the document body at the time of approval request is saved as "previous.audit" in an extension area of the document format information 732. Then, the workflow control unit 140 adds a hash value of the difference information and a value obtained by electronically signing the hash value to the extension area of the document format information 732. Information in the extension area of the document format information 732 is set to predetermined setting information included in the document data 730 by the signature processing unit 320 so that the content of the extension area is not deleted by an application.

For example, the signature processing unit 320 adds the hash value "H(diff1)" of the difference information diff1 and the value "Sig(H(diff1))" obtained by electronically signing the hash value to the document format information 732. Here, a function H(x) is a function that obtains a hash value for data x. A function Sig(x) is a function that obtains a value obtained by encrypting the data x with a private key, in other words, a function that obtains the electronic signature for the data x. The private key used for encryption is the private key of the user who has accepted the request for approval. Furthermore, data that summarizes H(diff1) and Sig(H(diff1)) is denoted as "1.audit". The signature processing unit 320 notifies the control server 100 that the signature has been put by the user.

The body 731 of the document data 730 includes signature frames 731a, 731b, and 731c. The signature frame 731a is obtained by adding a signature image of the user A to the signature frame 721a. The signature image of the user A is added to the signature frame 721a by the signature processing unit 320 when approval by the user is performed. The signature frame 731b corresponds to the signature frame 721b. The signature frame 731c corresponds to the signature frame 721c. The signature processing unit 320 overwrites the information of the body 731 with "previous.audit" of the document format information 732 when the signature processing is performed.

Next, the workflow control unit 140 proceeds to approval request to the user B. For example, the signature processing unit of the client device 400 detects that the user B has operated the client device 400 and logged into the cloud system 200. Then, the signature processing unit cooperates with the workflow control unit 140 to cause the operation screen of the cloud system 200 displayed on the client device 400 to display the presence of the approval request for the document data 730. The user B operates the client device 400 to input approval after editing or without editing the body 731 of the document data 730 or the like.

The signature processing unit of the client device 400 performs the signature processing by the user B when accepting the input of approval. Thereby, the document data 730 is processed into document data 740 (step ST11).

The document data 740 has a body 741 after the signature processing. The body 741 corresponds to the body 731. The body 741 includes signature frames 741a, 741b, and 741c. The signature frame 741a corresponds to the signature frame 731a. The signature frame 741b is obtained by adding the signature image of the user B to the signature frame 731b. The signature frame 741c corresponds to the signature frame 731c. Furthermore, the document data 740 has document format information 742.

The document format information 742 includes a hash value "H(diff2)" of difference information diff2 and a value "Sig(H(diff2))" obtained by electronically signing the hash value. Here, the difference information diff2 is information indicating the difference between the body 731 and the body 741. As the information of the body 731, the information held as "previous.audit" in the extension area of the document format information 732 before processing is used. The information of the body 741 is stored in "previous.audit" of the document format information 742 after processing. Furthermore, data that summarizes H(diff2) and Sig(H(diff2)) is denoted as "2.audit".

Next, the workflow control unit 140 proceeds to approval request to the user C. For example, the signature processing unit of the client device 500 detects that the user C has operated the client device 500 and logged into the cloud system 200. Then, the signature processing unit cooperates with the workflow control unit 140 to cause the operation screen of the cloud system 200 displayed on the client device 500 to display that there is the approval request for the document data 740. The user C operates the client device 500 to input approval after editing or without editing the body 741 of the document data 740 or the like. The approval by the user C may be called "decision" as described above.

The signature processing unit of the client device 500 performs the signature processing by the user C when accepting the input of approval. Thereby, the document data 740 is processed into document data 750 (step ST12).

The document data 750 has a body 751 after the signature processing. The body 751 corresponds to the body 741. The body 751 includes signature frames 751a, 751b, and 751c. The signature frame 751a corresponds to the signature frame 741a. The signature frame 751b corresponds to the signature frame 741b. The signature frame 751c is obtained by adding the signature image of the user C to the signature frame 741c. Furthermore, the document data 750 has document format information 752.

The document format information 752 includes a hash value "H(final)" of difference information final and a value "Sig(H(final))" obtained by electronically signing the hash value. Here, the difference information final is information indicating the difference between the body 741 and the body 751. As the information of the body 741, the information held as "previous.audit" in the extension area of the document format information 742 before processing is used. The information of the body 751 is stored in "previous.audit" of the document format information 752 after processing. Furthermore, data that summarizes H(final) and Sig(H(final)) is denoted as "final.audit".

When the procedures by all the users A, B, and C have been completed, the workflow control unit 140 requests the aggregate signature execution server 600 to add an aggregate signature to the appropriate document data. The aggregate signature addition unit 630 of the aggregate signature execution server 600 performs the following processing when accepting an addition request of the aggregate signature.

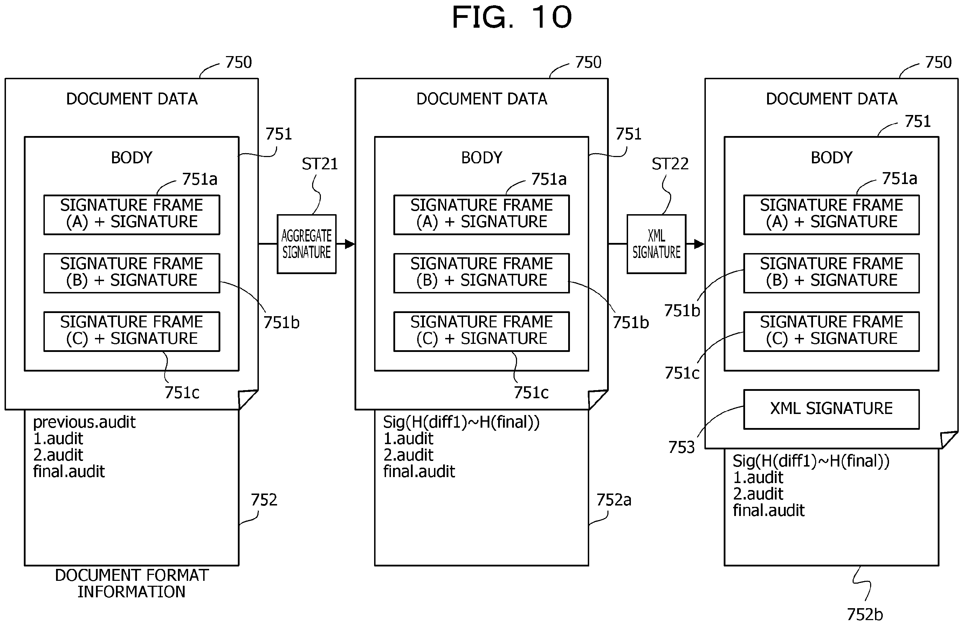

FIG. 10 is a diagram illustrating an example of adding an aggregate signature.

The aggregate signature addition unit 630 adds an aggregate signature to the document data 750 based on the hash value of the difference information included in the document format information 752 of the document data 750 (step ST21). In other words, the aggregate signature addition unit 630 generates the values "Sig(H(diff1) to H(final))" obtained by electronically signing the hash values based on the hash values "H(diff1)", "H(diff2)", and "H(final)" of the difference information included in the respective signature histories "1.audit", "2.audit", and "final.audit", and adds the generated values to the document format information 752. Thereby, the document format information 752 is updated with document format information 752a.

"Sig(H(diff1) to H(final))" is the aggregate signature reflecting the order of procedures in the workflow. The aggregate signature key generated based on the respective private keys of the users A, B, and C is used for the aggregate signature. It is possible to verify that the document data 750 has been created in the order of the signature frames in the body 751, in other words, in the proper procedure of the workflow, by a predetermined algorithm, based on the aggregate signature stored in the document format information 752a.

Furthermore, the aggregate signature addition unit 630 adds a standard format XML signature 753 to the body 751 of the document data in order to avoid occurrence of an error in application processing for the standard format (step ST22).

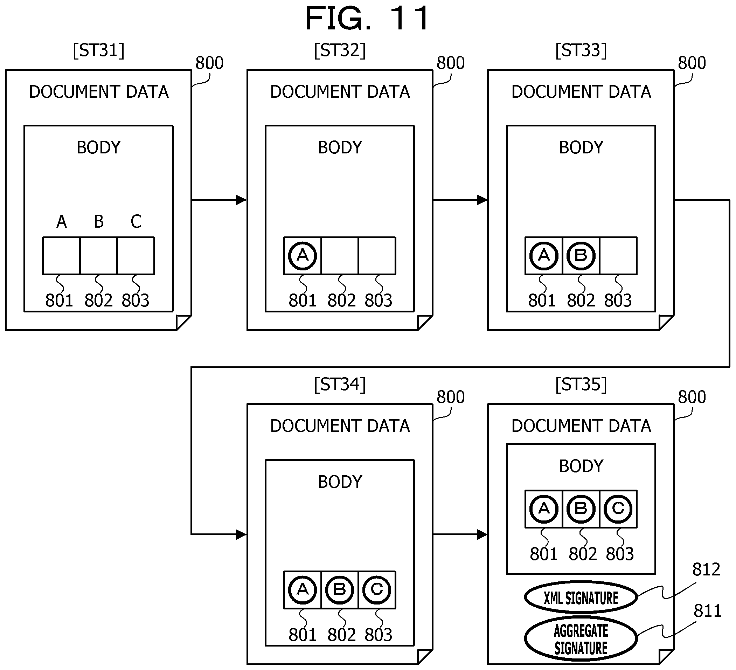

FIG. 11 is a diagram illustrating a signature adding example.

Consider a case where the workflow is started for document data 800 created by the user A. The document attribute of the document data 800 is "contract". Therefore, the order of the requestee users of the workflow is the order of the users A, B, and C. For example, when the document data 800 is displayed by the client device 300, signature frames 801, 802, and 803 corresponding to the users A, B, and C are displayed at predetermined positions in the body of the document data 800 in the order of the workflow. In the example of FIG. 11, the order of the signature frames 801, 802, 803 from left to right is assumed to correspond to the order of the workflow. The name, department, job title, and the like of the appropriate user may be described in the signature frames 801, 802, and 803 (step ST31). The workflow control unit 140 specifies that the workflow is to be requested in the order of the users A, B, and C, based on the arrangement order of the signature frames 801, 802, and 803.

First, the workflow control unit 140 requests approval of the document data 800 from the user A who is the first requestee. The signature processing unit 320 of the client device 300 operated by the user A performs the signature processing of the user A when accepting input of the approval of the user A in response to the request (step ST32). As a result of the signature processing, the signature image of the user A is added to the signature frame 801 corresponding to the user A. Note that in FIG. 11, the document data after processing by the signature processing is represented as document data 800 using the same reference sign "800" as before processing. The signature processing unit 320 notifies the control server 100 of completion of the signature processing. When accepting the notification, the workflow control unit 140 requests approval of the document data 800 from the user B who is the next requestee.

Next, the signature processing unit of the client device 400 operated by the user B performs the signature processing of the user B when accepting input of the approval of the user B in response to the request (step ST33). As a result of the signature processing, the signature image of the user B is added to the signature frame 802 corresponding to the user B. The signature processing unit of the client device 400 notifies the control server 100 of completion of the signature processing. The workflow control unit 140 requests approval of the document data 800 from the user C who is the next requestee.

Next, the signature processing unit of the client device 500 operated by the user C performs the signature processing of the user C when accepting input of the approval of the user C in response to the request (step ST34). As a result of the signature processing, the signature image of the user C is added to the signature frame 803 corresponding to the user C. The signature processing unit of the client device 500 notifies the control server 100 of completion of the signature processing.

Then, when detecting that the procedures by all the users A, B, and C as the requestees have been completed, the workflow control unit 140 requests the aggregate signature execution server 600 to add the aggregate signature. The aggregate signature addition unit 630 adds an aggregate signature 811 to the document data 800 when accepting a request of adding the aggregate signature. Furthermore, the aggregate signature addition unit 630 adds an XML signature 812 to the document data 800. In this way, the series of signature processing for the document data 800 are performed.

Next, a workflow control procedure by the control server 100 will be described.

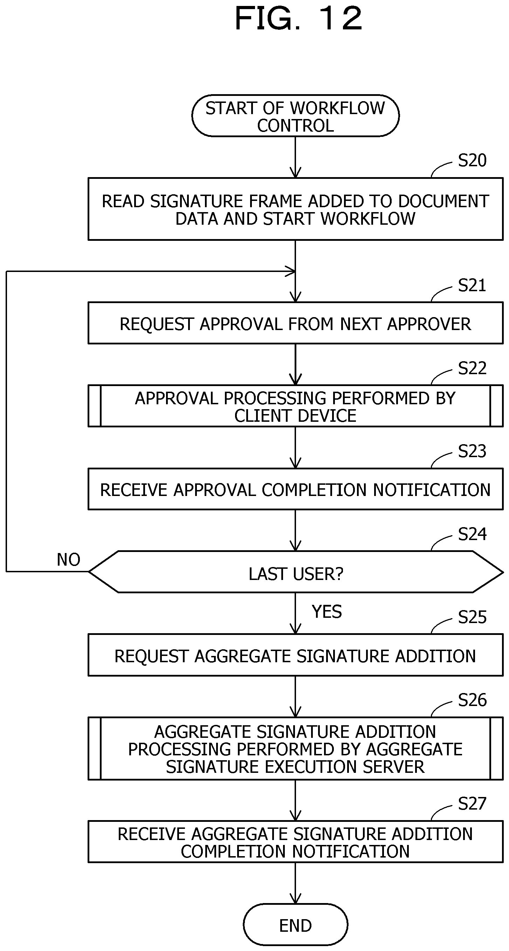

FIG. 12 is a flowchart illustrating a workflow control example.

Note that the document data to be processed in the workflow is assumed to be stored in the cloud system 200 after being compressed into a data format such as Zip, for example, like data with an extension of docx.

(S20) The workflow control unit 140 reads the signature frames added to the document data and starts the workflow. The workflow control unit 140 specifies the order of the requestee users of the workflow based on the arrangement order of the signature frames. Then, the workflow control unit 140 specifies the user corresponding to the drafter who is the first requestee as the next approver.

(S21) The workflow control unit 140 sends an approval request to the next approver. Here, the workflow control unit 140 determines the next approver based on the order of the requestee users specified in step S20.

(S22) The client device operated by the approver who has received the approval request accepts approval for the approver and performs approval processing. For example, when the appropriate approver logs in to the cloud system 200, the client device acquires the approval request for the appropriate approver from the control server 100, and displays a screen for accepting approval input within the operation screen of the cloud system 200. Details of the approval processing will be described below.

(S23) The workflow control unit 140 receives an approval completion notification from the client device.

(S24) The workflow control unit 140 determines whether the current approver is the last user of the requestees of the workflow. In a case where the current approver is the last user, the workflow control unit 140 advances the processing to step S25. In a case where the current approver is not the last user, the workflow control unit 140 advances the processing to step S21.

(S25) The workflow control unit 140 requests the aggregate signature execution server 600 to perform aggregate signature addition to the appropriate document data.

(S26) The aggregate signature execution server 600 performs aggregate signature addition processing for the appropriate document data in response to the aggregate signature addition request. Details of the aggregate signature addition processing will be described below.

(S27) The workflow control unit 140 receives a notification that the aggregate signature addition to the appropriate document data has been completed. Then, the workflow control ends.

Next, a procedure of approval processing by the client device 300 will be described. The client devices 400 and 500 also execute a similar procedure to the client device 300.

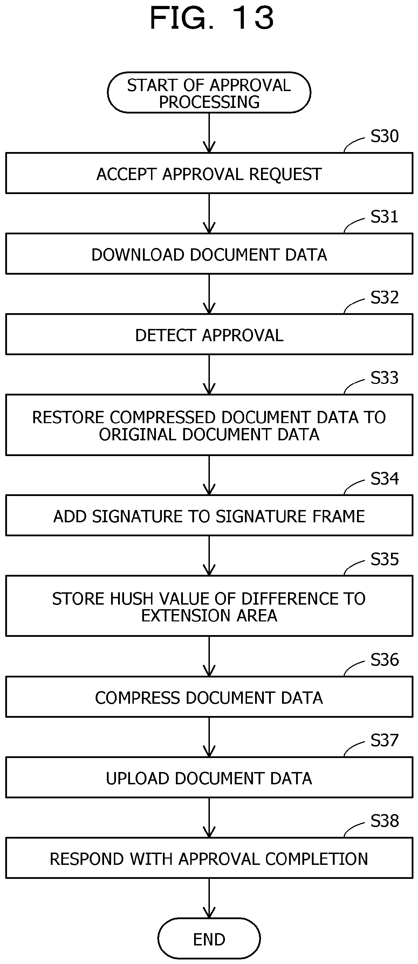

FIG. 13 is a flowchart illustrating an example of the approval processing.

The approval processing corresponds to step S22.

(S30) The signature processing unit 320 accepts the approval request of the document data from the control server 100.

(S31) The signature processing unit 320 downloads the target document data for the approval request from the cloud system 200 and stores the document data in the storage unit 310. As described above, the document data is being compressed.

(S32) The signature processing unit 320 detects the approval by the approver. For example, the approver can approve the document data by viewing the content of the appropriate document data using a predetermined application and accepting an approval operation on an approval acceptance screen displayed by the signature processing unit 320.

(S33) The signature processing unit 320 restores the compressed document data to the original document data.

(S34) The signature processing unit 320 adds the signature image of the approver whose approval has been accepted in step S22 to the signature frame of the document data.

(S35) The signature processing unit 320 stores the hash value of the difference between before and after processing of the document data by the current approver in the extension area of the document format information of the document data. At this time, the signature processing unit 320 stores the hash value of the difference and the value obtained by electronically signing the hash value of the difference with the approver's private key in the extension area.

(S36) The signature processing unit 320 compresses the document data after the signature processing.

(S37) The signature processing unit 320 uploads the compressed document data to the cloud system 200.

(S38) The signature processing unit 320 responds to the control server 100 with approval completion for the approval request. Then, the approval processing ends.

Next, a procedure of the aggregate signature addition processing by the aggregate signature execution server 600 will be described.

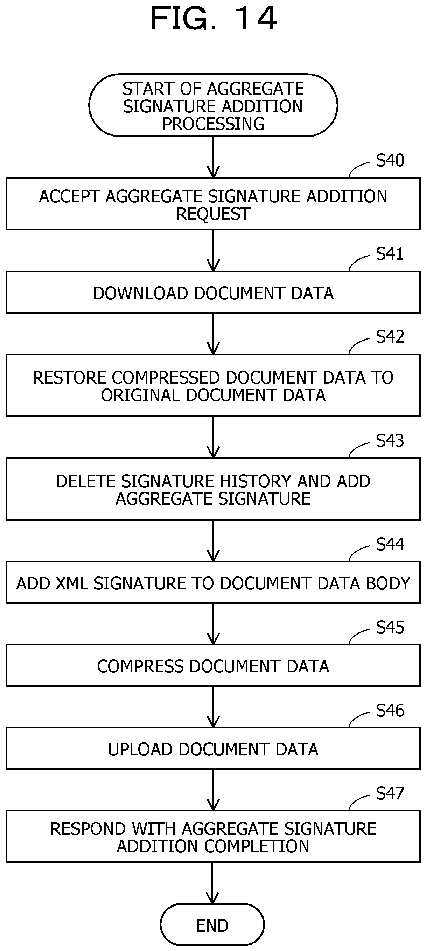

FIG. 14 is a flowchart illustrating an aggregate signature addition processing example.

The aggregate signature addition processing corresponds to step S26.

(S40) The aggregate signature addition unit 630 accepts a request of the aggregate signature addition to the document data from the control server 100.

(S41) The aggregate signature addition unit 630 downloads the target document data for the approval request from the cloud system 200 and stores the document data in the storage unit 610. As described above, the document data is being compressed.

(S42) The aggregate signature addition unit 630 restores the compressed document data to the original document data.

(S43) The aggregate signature addition unit 630 deletes the signature history ("previous.audit") included in the extension area of the document format information of the appropriate document data, and adds the aggregate signature to the extension area. For the aggregate signature, the aggregate signature key corresponding to the set of a plurality of approvers who have given approval according to the workflow is used. The aggregate signature addition unit 630 may receive information identifying the plurality of approvers together with the aggregate signature addition request from the workflow control unit 140 in step S40.

(S44) The aggregate signature addition unit 630 adds an XML signature to the body of the appropriate document data.

(S45) The aggregate signature addition unit 630 compresses the document data to which the aggregate signature and the XML signature have been added.

(S46) The aggregate signature addition unit 630 uploads the compressed document data to the cloud system 200.

(S47) The aggregate signature addition unit 630 notifies the control server 100 that the aggregate signature addition has been completed. Then, the aggregate signature addition processing ends.

In this way, by using the document data stored in the cloud system 200, it becomes possible to verify that each requestee user, in other words, each approver has performed the procedure for the document data in the appropriate order of the workflow. Furthermore, it becomes possible to verify that the document data has not been falsified by a third party. Note that, after completion of the workflow, for example, the control server 100 or another server computer can execute predetermined application processing based on the appropriate document data. Alternatively, the document data can be transferred from the cloud system 200 to another cloud system, and the document data can be exchanged between organizations such as companies while ensuring the validity of the document data.

Next, a data structure example of the document data will be described using the document data in the XML format as an example.

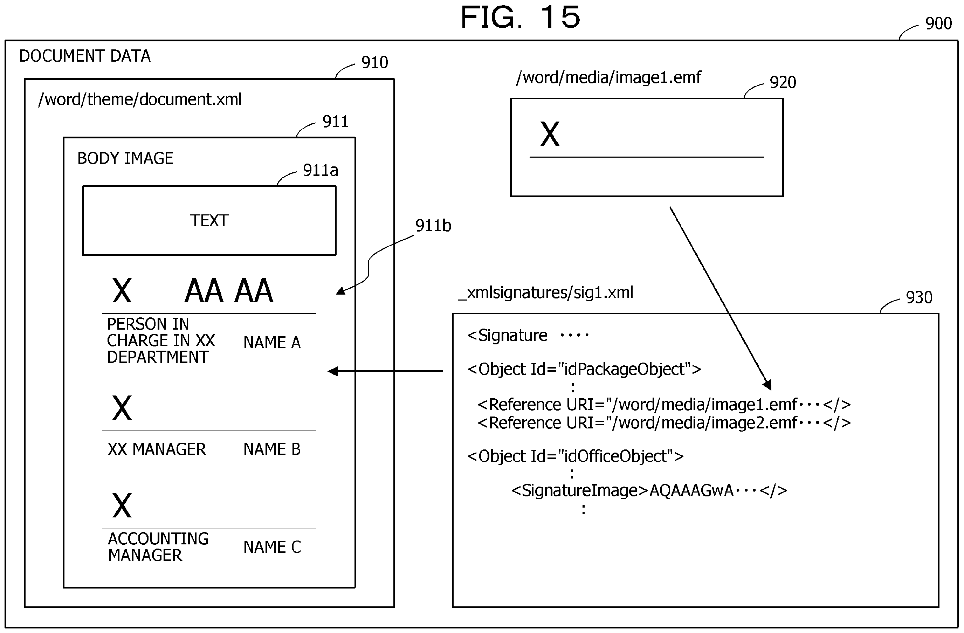

FIG. 15 is a diagram illustrating a data structure example (part 1) of the document data.

Document data 900 is data in a docx format. When compression of document data 900 is restored, a plurality of files having a directory structure can be obtained. Files 910, 920, and 930 are part of the plurality of files obtained by the restoration. The above-described document data 700 to 750 and 800 may also be implemented by a data structure similar to the document data 900.

The file 910 is the body of the document data 900. The file name of the file 910 is "/word/theme/document.xml".

The file 920 is an image file representing the signature field. The file name of the file 920 is "/word/media/image1.emf". Note that, in a case where an area for accepting input of a signature is surrounded by a frame, the area and the frame can be said to be the signature frame. In a case where the area for accepting input of a signature is not surrounded by a frame but is represented by a straight line or the like, the area and the straight line or the like can be said to be the signature field.

The file 930 is a file for setting the standard signature for the file 910. The file name of the file 930 is "_xmlsignatures/sig1.xml". For example, in a Reference tag of the file 930, the file 920 is read.

A body image 911 is an example of an image corresponding to the body of when the content of the document data 900 is displayed. The body image 911 includes a text 911a and a signature field display area 911b. A plurality of signature fields is displayed based on the file 920 in the signature field display area 911b. The signature image written in each signature field of the signature field display area 911b is managed by a SignatureImage tag of the file 930. For example, the signature image "AA" written in the topmost signature field of the signature field display area 911b corresponds to data represented by "AQAAAGwA..." in the SignatureImage tag of the file 930.

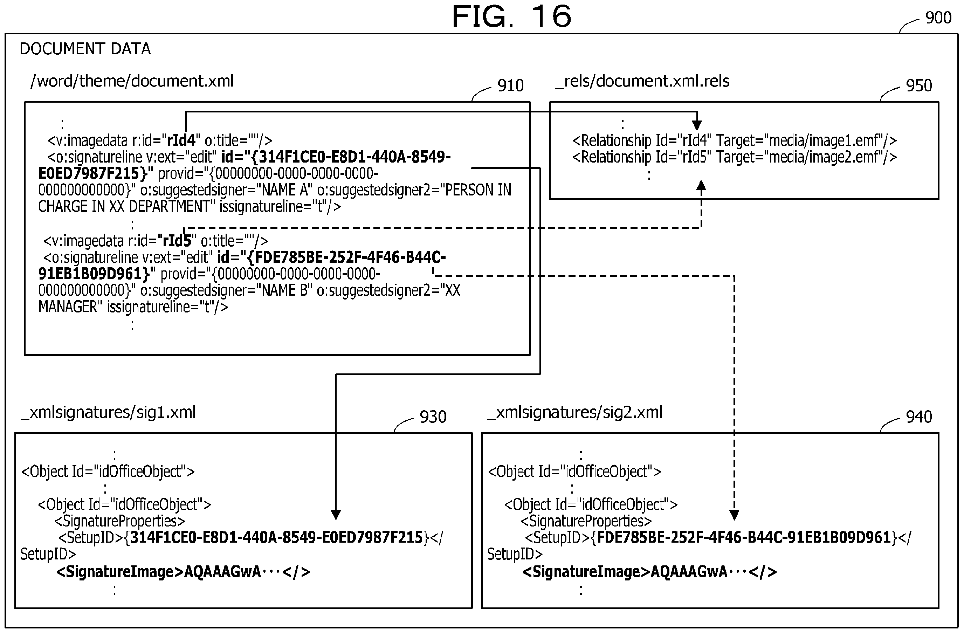

FIG. 16 is a diagram illustrating a data structure example (part 2) of document data.

For example, the document data 900 further includes files 940 and 950.

The file 940 is a file for setting the standard signature for the file 930, similarly to the file 930. The file name of the file 940 is "_xmlsignatures/sig2.xml".

The file 950 is a file for managing the image file of the signature field to be inserted into the body. The file name of the file 950 is "_rels/document.xml.rels".

For example, the image file of the signature field to be inserted into the body is identified by identification information indicated by "r:id" in a v:imagedata tag of the file 910. The identification information (for example, "rId4", "rId5", and the like) is associated with the file names of the file 920 and other image files in the file 950.

Then, setting of the signature field for the body is performed with an o:signatureline tag of the file 910. The order of setting the signature fields is associated with the order of the requestee users in the workflow. The name of the appropriate user is set in o:suggestedsigner of the tag. The job title is set in o:suggestedsigner2 of the tag. Furthermore, although illustration is omitted, an email address of the user can be set in o:suggestedsignermail of the tag. Furthermore, the size of the signature field can be set in style of the tag.

Moreover, a set value of id in the o:signatureline tag of the file 910 is associated with a value of a SetupID tag in the files 930 and 940. The signature image of the appropriate user is inserted in each signature field according to the settings of the files 930 and 940.

Note that, in the above-described example, the order from top to bottom of setting the signature fields in the file 910 is associated with the order of the requestee users of the workflow. This order corresponds to the display order from top to bottom of the plurality of signature fields in the signature field display area 911b of the body image 911. As another method, for example, the signature frame insertion unit 130 adds a number indicating the order of the appropriate signature fields to the o:signatureline tag or the like, thereby enabling the workflow control unit 140 to specify the order of the requestee users.

The extension area of the document format information illustrated in FIGs. 9 and 10 is implemented by providing a new directory in the directory structure of the document data 900, for example. In other words, in the directory structure, a directory for extension area (for example, _audit directory) is provided instead of Open XML format signature information (_xmlsignature directory). Then, the files such as "previous.audit" and "1.audit" can be stored in the directory for extension area. In that case, the signature processing unit 320 simply sets information of the added files to setting information [Content_Types].xml and document.xml.rels included in the document data 900 so that the added files are not deleted when the files are opened.

According to the above-described control server 100, it is possible to enable the workflow to be easily used.

The control server 100 inserts the signature area information such as the signature frames and the signature fields into the document data in the order of requesting the workflow for the plurality of users according to the attribute of the document. The control server 100 or another server computer that provides the workflow system can specify the order of the requestees in the workflow and start the workflow based on the document data to which the signature area information has been added. Therefore, the users do not have to determine the requestee of the workflow for the appropriate document and input the requestee to the control server or the another server computer. Therefore, the users become able to easily use the workflow.

Furthermore, it becomes possible to verify the validity of the document data including the signature order by verifying the electronic signatures added to the document data. Therefore, it becomes possible to verify the validity including the document data generation procedure. Therefore, the user or organization on the reception side of the document data can safely use the document data whose validity has been properly verified.

For example, a client device or a server device incorporates information regarding a data creation route or a data approval route within an organization or between organizations into data, and the client device creates or approves data based on the incorporated information, so that the server device and the client device may cooperate to execute processing of including a digital signature of a data creator or a data approver in the data. Therefore, the users' operational burden associated with the workflow procedure is reduced, and the workflow becomes able to be easily used. Furthermore, it becomes possible to appropriately verify authenticity of the data. Note that the server device corresponds to the control server 100. Furthermore, the above-described approval route table 121 is an example of the information regarding the data creation route or the data approval route. In other words, a data creation route table having a data structure similar to the approval route table 121 may be stored in the storage unit 120 in advance, and the data creation route table may be used instead of the approval route table 121. Furthermore, the data creation may be performed by updating the data in which the information regarding the data creation route or the data approval route has been incorporated, for example.

The control server 100 executes, for example, the next processing.

When data of a document is input, the signature frame insertion unit 130 adds the first information to the data of the document, the first information indicating a plurality of areas, in the document, that accepts input of signatures by a plurality of users according to the attribute of the document, and the first information being to be used for the processing of specifying the order of requestee users of the procedure involving the signatures in the workflow regarding the document. The signature frame insertion unit 130 outputs the data of the document to which the first information has been added.

Therefore, the users do not have to designate the requestee according to the document, and becomes able to easily use the workflow. The users can efficiently use the workflow. Furthermore, the information indicating the signature area to be used in the workflow of, for example, normal approval is simply added to the data of the document, and there is no need to create new data items and set the order of the workflow. Therefore, there is also an advantage that there is no need to add extra data items to the data of the document.

For example, the signature frame insertion unit 130 adds, to the first information, user attribute information corresponding to the attribute, in association with each of the plurality of areas by referring to user attribute management information that holds: the user attribute information that indicates an attribute to be satisfied by the user who puts the signature on the attribute of the document; and an order of the user attribute information according to the attribute of the document.

First, by adding a template of the approval route to the data of the document, the management cost can be reduced compared to managing the approval route for each user. For example, within an organization, the user with a job title can change frequently, so managing the approval routes by specifying the user increases a maintenance cost of the approval routes when the user's job title changes. By using the user attribute management information, for example, when the user with a job title changes, the user name management information is simply changed, and the user's work cost can be reduced. Note that the approval route table 121 is an example of the user attribute management information.

The signature frame insertion unit 130 converts the user attribute information included in the first information into the user name based on the user name management information that holds the user name in association with the user attribute information.

Thereby, the requestee route of the workflow can be appropriately generated from the template of the approval route. Note that the organization management table 122 is an example of the user name management information.

For example, the above-described user attribute information includes information indicating the user's job title. Thereby, it becomes possible to create the template of the approval route according to the job title within the organization.

The workflow control unit 140 specifies the order of the requestee users of the workflow based on the positional relationship of a plurality of areas that accepts input of signatures. Thereby, it becomes possible to specify the proper route of the workflow based on the template of the approval route.

Furthermore, the first information may be information indicating a frame surrounding each of the plurality of areas that accepts input of signatures, in other words, the signature frame.

The workflow control unit 140 specifies the order of the requestee users based on the first information included in the data of the document, and starts the workflow for requesting approval of the document from a plurality of users according to the order.

Therefore, it becomes possible to easily use the workflow by specifying the order of the requestee users of the workflow from the data of the document and starting the workflow.

The workflow control unit 140 requests the first information processing device used by the user to perform user's approval of the document. Each of the client devices 300, 400, and 500 is an example of the first information processing device. When accepting the user's approval of the document, the signature processing unit (for example, the signature processing unit 320) of the first information processing device adds, to the data of the document, the hash value of the difference of the data of the document before and after processing the document and the electronic signature obtained by encrypting the hash value with the private key of the user.

Thereby, the approval procedure is performed by the appropriate user himself/herself, and it becomes possible to appropriately verify that there is no falsification by a third party.

When accepting the user's approval of the document, the signature processing unit 320 adds the signature image of the user to the signature area included in the data of the document corresponding to the user.

Thereby, when another user browses the content of the document, it becomes possible to confirm that the appropriate user has already approved the document.

When the electronic signature corresponding to the last user of the plurality of users is added to the data of the document, the workflow control unit 140 requests a second information processing device to perform processing of adding, to the data of the document, an aggregate signature obtained by encrypting a plurality of the hash values included in the data of the document with an aggregate signature key generated based on the private key of each of the plurality of users. The aggregate signature execution server 600 is an example of the second information processing device. For example, the aggregate signature addition unit 630 adds the aggregate signature to the data of the document in response to the request.

Thereby, the approval procedure is appropriately performed by each of a plurality of users, and it becomes possible to verify that there is no falsification by a third party.

The aggregate signature execution server 600 adds another electronic signature to the data of the document according to the data format of the data of the document for the body of the data of the document. The XML signature is an example of the another electronic signature. For example, in the case where data of the document is in the XML format, it is conceivable that the aggregate signature execution server 600 puts the XML signature on the body of the data of the document and adds information of the XML signature to the data of the document. Thereby, it is possible to suppress occurrence of an error in the application processing for the standard format in the appropriate data format.

Note that the information processing according to the first embodiment may be implemented by causing the processing unit 12 to execute a program. Furthermore, the information processing of the second embodiment can be implemented by causing the CPU 101 to execute the program. The program can be recorded in the computer-readable recording medium 113.

For example, the program can be distributed by distributing the recording medium 113 in which the program is recorded. Alternatively, the program may be stored in another computer and distributed via a network. For example, a computer may store (install) the program, which is recorded in the recording medium 113 or received from another computer, in a storage device such as the RAM 102 or the HDD 103, read the program from the storage device, and execute the program.

The above description merely indicates the principle of the present invention. Moreover, numerous modifications and variations are able to be made by those skilled in the art, and the present invention is not limited to the above-described or illustrated exact configuration and application example, and all corresponding modifications and equivalents are regarded to fall within the scope of the present invention by appended claims and equivalents thereof.

### REFERENCE SIGNS LIST

10 Information processing device
11 Storage unit
12 Processing unit
20, 20a Document data
21, 22 Signature area
30 Workflow

## Claims

1. A control method to execute a process comprising:
incorporating information regarding a data creation path or a data approval path within an organization or between organizations to data by a clint device or a server device; and
cooperating by the server device and the client device to include a digital signature of a creator or an approver of the data in the data by creating or approving the data by the client device based on the incorporated information.

2. A generation method comprising:
causing a computer to add, when data of a document is input, first information to the data of the document, the first information indicating a plurality of areas, in the document, that accepts input of signatures by a plurality of users according to an attribute of the document, and the first information being to be used for processing of specifying an order of requestee users of a procedure that involves the signatures in a workflow regarding the document; and
causing the computer to output the data of the document to which the first information has been added.

3. The generation method according to claim 2, wherein
the computer further adds, to the first information, user attribute information corresponding to the attribute, in association with each of the plurality of areas by referring to user attribute management information that holds: the user attribute information that indicates a user attribute to be satisfied by the user who puts the signature on the attribute of the document; and an order of the user attribute information according to the attribute of the document.

4. The generation method according to claim 3, wherein
the computer further converts, based on user name management information that holds a user name in association with the user attribute information, the user attribute information included in the first information into the user name.

5. The generation method according to claim 3, wherein
the user attribute information includes information that indicates a job title of the user.

6. The generation method according to claim 2, wherein
the computer further specifies the order based on a positional relationship of the plurality of areas.

7. The generation method according to claim 2, wherein
the first information is information that indicates a frame that surrounds each of the plurality of areas.

8. The generation method according to claim 2, wherein
the computer further specifies the order of the requestee users based on the first information included in the data of the document, and starts the workflow that seeks approval of the document from the plurality of users according to the order.

9. The generation method according to claim 8, wherein
the computer further requests a first information processing device used by the user to perform approval of the document by the user, and
when the first information processing device accepts the approval of the document by the user, the first information processing device adds, to the data of the document, a hash value of a difference in the data of the document before and after processing the document and an electronic signature obtained by encrypting the hash value with a private key of the user.

10. The generation method according to claim 9, wherein
the first information processing device further adds a signature image of the user to the area included in the data of the document corresponding to the user when the first information processing device accepts the approval of the document by the user.

11. The generation method according to claim 9, wherein
when the electronic signature corresponding to a last user of the plurality of users is added to the data of the document, the computer further requests a second information processing device to perform processing of adding, to the data of the document, an aggregate signature obtained by encrypting a plurality of the hash values included in the data of the document with an aggregate signature key generated based on the private key of each of the plurality of users, and
the second information processing device adds the aggregate signature to the data of the document.

12. The generation method according to claim 11, wherein
the second information processing device further adds, to the data of the document, another electronic signature according to a data format of the data of the document for a body of the data of the document.

13. A generation program that causes a computer to execute a process, the process comprising:
when data of document is input, adding first information to the data of the document, the first information indicating a plurality of areas, in the document, that accepts input of signatures by a plurality of users according to an attribute of the document, the first information being to be used for processing of specifying an order of requestee users of a procedure that involves the signatures in a workflow regarding the document; and
outputting the data of the document to which the first information has been added.

14. An information processing device comprising:
a storage unit configured to store data of an input document; and
a processing unit configured to add first information to the data of the document and output the data of the document to which the first information has been added, the first information indicating a plurality of areas, in the document, that accepts input of signatures by a plurality of users according to an attribute of the document, and the first information being to be used for processing of specifying an order of requestee users of a procedure that involves the signatures in a workflow regarding the document.
